# EUROPÄISCHE PATENTSCHRIFT

(11) **EP 2 431 170 B1**
(45) Veröffentlichungstag und Bekanntmachung des Hinweises auf die Patenterteilung: **28.08.2013**
(21) Anmeldenummer: 10177071.7
(22) Anmeldetag: 16.09.2010
(51) Int. Cl.: B32B 13/00, B32B 13/08, B44C 5/04, C04B 41/71, E04F 13/00, E04F 15/00, C04B 41/52, B32B 21/02, B32B 21/06

(54) **Dekorative Werkstoffplatte mit erhöhter Wasserbeständigkeit**
Decorative material board with improved water resistance
Plaque de matière première décorative dotée d'une résistance à l'eau augmentée

(43) Veröffentlichungstag der Anmeldung: 21.03.2012
(73) Patentinhaber: Falquon GmbH, 16928 Pritzwalk (DE)
(72) Erfinder:
(74) Vertreter: Morawski, Birgit

(56) Entgegenhaltungen:
- EP-A1- 0 894 780
- EP-A1- 1 367 110
- EP-A1- 1 914 215
- EP-A2- 1 837 449
- WO-A1-02/36524
- WO-A1-2004/050280
- DE-C1- 3 938 817
- US-A1- 2002 160 680
- US-A1- 2004 185 231
- US-A1- 2010 068 458

## Beschreibung

Die vorliegende Erfindung betrifft eine Werkstoffplatte nach dem Oberbegriff des Anspruchs 1, deren Verwendung nach Anspruch 10 und ein Verfahren zu deren Herstellung nach Anspruch 12.

Werkstoffplatten enthaltend zementgebundene Trägerplatten, wie z.B. Zementspanplatten, besitzen bereits aufgrund ihrer spezifischen Eigenschaften eine hohe Beständigkeit gegenüber Feuchtigkeit und direktem Wasserkontakt. So weisen Zementspanplatten unter definierten Bedingungen bei Lagerung in Wasser lediglich einen Quellwert von ca. 1 % auf. Auch sind die Dimensionsänderungen einer Zementspanplatte bei steigender relativer Luftfeuchtigkeit und steigenden Temperaturen minimal. Aus diesem Grund sind Zementspanplatten hervorragend für den Einsatz im Außenbereich oder in Nassbereichen geeignet.

Zementspanplatten sind in der Regel einfarbig, ohne ein spezifisches Dekor erhältlich. Dadurch bleibt jedoch der dekorative Aspekt unberücksichtigt und Gestaltungsmöglichkeiten insbesondere im Fassadenbereich werden vernachlässigt.

Aus diesem Grund wurden verschiedene Methoden zur Dekoration von Zementspanplatten entwickelt. Es ist möglich, eine Dekorschicht unmittelbar auf die Oberfläche einer zementgebundenen Platte mittels bekannter Druckverfahren zum Beispiel Digitaldruck aufzubringen.

Ein weiterer Ansatz zur Dekoration einer zementgebundenen Platte besteht in der Fixierung einer Dekorfolie bzw. eines Dekorfilms auf der Oberfläche der zementgebundenen Platte. Als nachteilig hat sich hier jedoch erwiesen, dass die Fixierung der dekorativen Beschichtung auf der Zementspanplatte, die dekorative Beschichtung selbst beziehungsweise die auf der dekorativen Beschichtung aufgetragene Verschleißschicht einem permanenten Angriff durch Wasser oder Feuchtigkeit nicht standhalten. Dabei versagt in der Regel nicht das gesamte System aus Trägerplatte, Dekorschicht und Verschleißschicht, sondern deren Einzelkomponenten. Dies zeigt sich beispielsweise beim Einsatz von Lack als Verschleißschicht, der über die Zeit abblättert oder vergraut, was auf ein Unterwandern des Lackes oder einen Abbau der Lackmatrix zurückzuführen ist. Häufig sind auch Ablösungen der dekorativen Beschichtung mit der Verschleißschicht zu beobachten, die auf ein Versagen der Verklebung zurückzuführen sind.

Zur Behebung dieses Problems wurden in der Vergangenheit verschiedene Ansätze gewählt. Ein möglicher Ansatz besteht in der Verbesserung der Haftung zwischen den einzelnen Komponenten.

So ist aus der EP 0 872 338 A1 eine dekorative Platte entnehmbar, die eine zementgebundene Platte als Materialplatte mit einer Dekorschicht und einer auf der Dekorschicht angeordneten Oberflächenschutzschicht umfasst. Die Dekorschicht weist mindestens eine Verbindung mit einem aktiven Wasserstoffatom auf und die Oberflächenschutzschicht umfasst mindestens eine Isocyanat-Verbindung. In der Folge reagieren diese Verbindungen miteinander, wodurch eine deutliche Haftungsverbesserung erreicht wird.

Aus der EP 1914215 A1 sind dekorative Wandpaneele basierend auf Zementspanplatten bekannt, auf welcher eine oder mehrere Lagen einer konventionellen Beschichtung enthaltend mindestens ein Pigment und einer auf diese Beschichtung aufgetragene strahlungsgehärtete Beschichtung angeordnet sind. Die konventionelle Beschichtung enthält Bindemittel, die durch freie radikalische oder ionische Emulsionspolymerisation erhalten werden. Typische Bevorzugt ist die in dem Verfahren verwendete konventionelle Beschichtung nicht durch Strahlung oder chemische Vernetzung härtbar. Die letzte Lage der konventionellen Beschichtung umfasst Verbindungen, die mit Isocyanat-Gruppen reagieren.

WO 2004/050280 A1 beschreibt ein Verfahren zur Herstellung eines dekorativen Laminats umfassend eine obere dekorative verschleißfeste Lage und einen Trägerkern. Dieser Trägerkern kann unter anderem aus einer Zementspanplatte bestehen. Die Decklagen sind mittels eines Bindemittels und unter Anwendung von Druck mit der Zementspanplatte verbunden. Als Bindemittel werden wasserlöslichen Klebemittel oder Schmelzklebstoffe verwendet. Dekorpapiere werden ebenfalls verwendet, wobei diese Dekorpapiere mit einem Melamin-Formaldehyd-Harz imprägniert sind.

WO 02/36524 A1 betrifft die Verwendung einer verschleißfesten Oberflächenbeschichtung für Zementfaserplatten. Die verwendeten Zementfaserplatten können mit einer Primerschicht versehen sein (Seite 5, Zeile 5-7). Auf diese vorbehandelte Zementfaserplatte wird eine dekorative Beschichtung umfassend eine Primerschicht (z.B. Acryl Latex, Vinyl-Primer) und ein oder mehrere Farbschichten (z.B. Acryl-Latex-Farben u.a.) aufgetragen. Unterhalb der Primerschicht kann ebenfalls eine Bindemittelschicht verwendet werden. Die Bindemittelschicht enthält Acryl-Latexmaterialien. Die auf die dekorative Beschichtung aufgetragene Oberflächenbeschichtung umfasst unter anderem Acryl- Emulsionen oder härtbare Acrylate.

Die beschriebenen Ansätze bewirken jedoch nur eine unzureichende Verbesserung der Wasserbeständigkeit der hergestellten dekorativen Platten, so dass diese Platten für einen dauerhaften Einsatz im Außenbereich nicht geeignet sind.

Der vorliegenden Erfindung liegt somit die Aufgabe zu Grunde, eine Werkstoffplatte zur Anwendung im Außenbereich bereitzustellen, die eine erhöhte Wasserbeständigkeit aufweist und somit auch dauerhaft in feuchten Umgebungen einsetzbar ist.

Diese Aufgabe wird erfindungsgemäß durch eine Werkstoffplatte mit den Merkmalen des Anspruchs 1 gelöst.

Entsprechend umfasst die Werkstoffplatte, die insbesondere zur Anwendung im Außenbereich geeignet ist,
- eine zementgebundene Platte als Trägerplatte mit einer modifizierten Oberflächenseite,
- eine auf der Oberflächenseite der Trägerplatte aufgetragene erste haftvermittelnde Schicht,
- eine auf der ersten haftvermittelnden Schicht angeordnete modifizierte Dekorschicht, wobei die eine Dekorschicht in Form einer Dekorfolie oder eines Dekorfilms acrylathaltige Verbindungen aufweist, wobei Acrylate verwendet werden, die im Härtungs- bzw. Trocknungsprozess nachvernetzen,
- eine auf der modifizierten Dekorschicht aufgetragene zweite haftvermittelnde Schicht, und
- eine auf der zweiten haftvermittelnden Schicht angeordnete Verschleißschicht aus einem strahlenhärtbaren acrylathaltigen Lack.

Die einzelnen Komponenten der Werkstoffplatten, d.h. insbesondere zementgebundene Trägerplatte, Dekorschicht und Verschleißschicht, sind somit durch einzelne, die Haftung zwischen den jeweiligen Komponenten verbessernde Schichten, insbesondere Haftvermittler bzw. Klebekomponenten, miteinander verbunden. Durch die Auswahl von geeigneten Klebekomponenten erfolgt, insbesondere durch den Zusatz weiterer Härtungsmittel zur Klebekomponente, eine Vernetzung mit den einzelnen Komponenten der Werkstoffplatten, wodurch die Haftung zwischen den Komponenten beziehungsweise einzelnen Schichten deutlich verbessert wird. Ein Eindringen von Wasser beziehungsweise Feuchtigkeit zwischen die so miteinander vernetzten Schichten ist deutlich erschwert, wodurch eine verbesserte Wasserbeständigkeit und Stabilität erreicht wird.

Folgende technologische Aspekte sind im Falle der vorliegenden Werkstoffplatten somit berücksichtigt. So wird die dekorative Schicht in wasserbeständiger Form mittels einer elastischen Verankerung oder Verklebung auf der Trägerplatte aufgebracht, wobei die dekorative Beschichtung zur Erhöhung der Wasserbeständigkeit zusätzlich modifiziert ist. Darüber hinaus erfolgt die Verwendung eines wasserfesten Haftvermittlers zwischen der Dekorbeschichtung und einer ersten Verschleißschicht bzw. zwischen mehreren Verschleißschichten. Die Verschleißschichten selber sind durch einen hochvernetzten und zugleich elastischen Aufbau gekennzeichnet.

In einer bevorzugten Ausführungsform der Werkstoffplatte liegt die zementgebundene Trägerplatte in Form einer zementgebundenen Holzfaserplatte und/oder eine zementgebundenen Holzspanplatte vor. Zementgebundene Holzfaserplatten oder Holzspanplatten weisen im Verhältnis zu Kompaktplatten oder Zementplatten ein geringeres Gewicht auf, wodurch diese insbesondere für den Außeneinsatz im Fassadenbereich geeignet sind.

In einer Ausführungsform kann die mindestens eine modifizierte Oberflächenseite der zementgebundenen Trägerplatte gespachtelt vorliegen. Durch das Spachteln, bevorzugt unter Verwendung von geeigneten UV-Spachtelmassen, werden im Trägermaterial vorhandene Löcher geschlossen und eine größere Oberflächenruhe durch eine Vergleichmäßigung der Oberfläche (Zuschmieren) hergestellt. Insbesondere Schleifmarkierungen in Längs- und Querrichtung können damit entfernt werden. Typische Spachtelmassen sind hochgefüllte Lacke, die auf Acrylaten basieren. Bevorzugte Acrylate sind Mono- und Diacrylate, wie zum Beispiel 1,6-Hexandioldiacrylat, 2-(2-Ethoxyethoxy)ethylacrlat oder exo-1,7,7-Trimethylbicyclo[2.2.1 ]hept-2-ylacrylat, sowie gesättigte oder ungesättigte Acrylsäureester und gesättigte oder ungesättigte Acrylharze.

Auch kann die Oberfläche der Trägerplatte unter Verwendung von mindestens einem Primer bzw. Haftvermittlers, insbesondere einem Primer auf Isocyanatbasis, behandelt oder bearbeitet vorliegen. Die Begriffe Primer und Haftvermittler werden üblicherweise synonym verwendet. Diese sind chemisch reaktive Substanzen, die der Verbesserung der Haftung des Klebstoffes am Substrat und/oder der Verbesserung der Alterungsbeständigkeit einer Verklebung dienen. Dies wird in erster Linie durch eine hohe Anzahl an reaktiven Gruppen und durch die bessere Benetzung der Substratoberfläche erreicht.

Bei Primern bzw. Haftvermittlern handelt es sich um mit Lösemitteln verdünnte Klebstoffe, die die Oberfläche des Substrates z.B. in Form einer Trägerplatte leicht anlösen, so dass der anschließend aufgetragene Klebstoff auf dem Substrat besser verankert oder verkrallt wird. Neben Lösemitteln sind in den Primermischungen häufig Aerosile, d.h. kolloidale Kieselsäuren, zur Erzeugung einer strukturierten Oberfläche enthalten. Primer verbessern in erster Linie die Adhäsion.

Als Primer oder Haftvermittler werden häufig solche Substanzen eingesetzt, die sich in ihrer chemischen Zusammensetzung von dem später verwendeten Klebstoff unterscheiden. So ist es möglich, bei Verwendung von Klebstoffen auf Acetat-Basis, wie z.B. Ethylenvinylacetat (EVA) oder Polyvinylacetat (PVAc), Primer auf der Basis von Isocyanaten einzusetzen. Dabei kommt es zu einer chemischen Reaktion zwischen Substrat, Primer und Klebstoff, wodurch die Haftung zwischen den Komponenten deutlich verbessert wird.

Als für Primer geeignete Isocyanate werden im Rahmen der vorliegenden Erfindung bevorzugt aliphatische, acyclische oder aromatische Mono-, Di- oder Triisocyanatverbindungen verwendet. Die zum Einsatz kommenden Isocyanate sind bevorzugt ausgewählt aus der Gruppe enthaltend 2,4-Toluendüsocyanat, 2,6-Toluendiisocyanat, Diphenylmethan-4,4'-düsocyanat, Xylendiisocyanat, Hexamethylendiisocyanat, Dicyclohexylmethan-4,4'-diisocyanat und Triphenylmethantrüsocyanat.

In einer weiteren Ausführungsform kann die mindestens erste haftvermittelnde Schicht mindestens eine Klebekomponente und/oder mindestens einen Haftvermittler enthalten. Dabei kann die Klebekomponente ausgewählt sein aus einer Gruppe enthaltend Schmelzklebstoffe, Isocyanate und/oder modifizierte Silane ausgewählt sein.

Typische Schmelzklebstoffe sind acetathaltige Klebstoffe wie Ethylen-vinyl-actet (EVA), Styrol-Copolymer-Klebstoffe (PSA), Polyvinylacetat (PVAc) oder Polyolefin-Klebstoffe.

Die in der haftvermittelnden Schicht verwendeten Isocyanate entsprechen im Wesentlichen den für die Grundierung der Trägerplatte bzw. als Primer aufgelisteten IsocyanatVerbindungen. Die aufgeführten Isocyanatverbindungen können ebenfalls als Härtungsmittel dienen, da diese einen Nachvernetzungsprozess auslösen.

Typische modifizierte Silane, die als Klebekomponente verwendet werden können sind modifiziertes Silane, insbesondere alkoxysilylterminierte Silane wie z.B. Tetraethoxysilan. Methyltriethoxysilan, Octyltriethoxysilan, (3-Acryloyloxypropyl)trimethoxysilan oder 2-(7-Oxabicyclo[4.1.0]hept-3-yl)ethyl-trimethoxysilan. Weitere silanhaltige Klebekomponenten sind Pre-Polymere oder Polymere auf Silanbasis oder mit Silanen modifizierte Polymere, insbesondere ein modifiziertes Silan-Polymer (MS-Polymer), Silan-modifiziertes Polyurethan, Silan-modifizierte Polyester, Silan-modifizierte Polyacrylate oder Silan-modifiziertes Polyoxypropylen.

Darüber hinaus ist es von Vorteil, der ersten haftvermittelnden Schicht geeignete Härtungsmittel zu zusetzen. Als geeignete Härtungsmittel sind insbesondere starke oder schwache Säuren, wie zum Beispiel p-Toluensulfonsäure, Phosphorsäuren und deren Salze, substituierte und unsubstituierte Carbonsäuren geeignet.

Die mindestens eine Dekorschicht ist mit einer Acrylat-haltigen Verbindung modifiziert . Die für diesen Zweck verwendete Acrylate sind solche, die im Härtungs- bzw. Trocknungsprozess nachvernetzen. Der Prozess des Nachvernetzens kann in Gegenwart von sauren Härten, insbesondere der bereits angeführten sauren Härtungsmittel, beschleunigt werden.

Besonders bevorzugt werden hierfür Poly(acrylat), Poly(alkylacrylat), Poly(alkylalkacrylat), Poly(hydroxyfunktionalisiertes Alkacrylat), Poly(acrylsäure), mindestens teilweise neutralisierte Poly(acrylsäure), mindestens teilweise verseifte Poly(acrylsäure), Poly(alkacrylsäure), mindestens teilweise neutralisierte Poly(alkacrylsäure) und/oder mindestens teilweise verseifte Poly(alkacrylsäure) verwendet.

Durch die Modifizierung der Dekorschicht, die insbesondere in Form eines Dekorfilmes oder einer Dekorfolie verwendet wird, kann die Wasserbeständigkeit der Dekorschicht erhöht werden. Zusätzlich ermöglicht die reaktive Acrylat-Gruppe in Kombination mit dem zugefügten Härtungsmittel oder der Klebekomponente die Ausbildung einer zusätzlichen Vernetzung zwischen der Trägerplatte und der Dekorschicht bzw. dem Dekorfilm.

In einer weiteren bevorzugten Ausführungsform weist die mindestens zweite haftvermittelnde Schicht mindestens eine Klebekomponente und/oder mindestens einen Haftvermittler auf. Geeignete Klebekomponenten sind Acrylate, Isocyanate und modifizierte Silane.

Besonders bevorzugt umfasst die zweite haftvermittelnde Schicht eine Isocyanatverbindung. Die Isocyanatverbindung bewirkt eine chemische Ankopplung der ersten Lackschicht an die dekorative Schicht in Form eines Films oder einer Folie. Die zweite haftvermittelnde Schicht kann auch als eine auf die Dekorschicht aufgetragene Primerschicht angesehen werden. Die für die zweite haftvermittelnde Schicht bevorzugt verwendeten Isocyanate entsprechen den bereits für die Grundierung der Trägerplatte verwendeten Iscocyanaten.

Die mindestens eine Verschleißschicht besteht aus einem strahlenhärtbaren acrylathaltigen Lack. Typischerweise enthalten die als Verschleißschicht verwendeten Lacke (Meth)acrylate, wie Polyester(meth)acrylate, Polyether(meth)acrylate, Epoxy(meth)acrylate oder Urethan(meth)acrylate.

Durch die Auswahl der geeigneten Lacke zur Verwendung als Verschleißschicht ist es möglich, dass sich diese trotz hoher Vernetzungsdichte an die durch Feuchtigkeit beziehungsweise Wasser hervorgerufenen Dimensionsänderungen anpassen können.

Es ist besonders von Vorteil, wenn mehr als eine Verschleißschicht, bevorzugt zwei oder drei Verschleißschichten jeweils aufeinander angeordnet oder aufgetragen werden.

Auch kann die mindestens eine Verschleißschicht chemische Vernetzer enthalten. Insbesondere Vernetzer auf Isocyanat-Basis der oben genannten Art sind hier bevorzugt geeignet. Die Verwendung von Vernetzern erhöht die Zwischenhaftung der einzelnen, übereinander angeordneten Verschleißschichten.

Der Verschleißschicht können weitere Additive wie Flammschutzmittel und/oder luminiszierende Stoffe zugegeben werden. Geeignete Flammschutzmittel können ausgewählt sein aus der Gruppe enthaltend Phosphate, Borate, insbesondere Ammoniumpolyphosphat, Tris(tri-bromneopentyl)phosphat, Zinkborat oder Borsäurekomplexe von mehrwertigen Alkoholen. Als luminiszierende Stoffe können fluoreszierende und phosphoreszierende Stoffe, insbesondere Zinksulfid und Erdalkalialuminate, zum Einsatz kommen.

Die erfindungsgemäßen Werkstoffplatten sind aufgrund ihrer erhöhten Wasserstabilität für Anwendungen im Außenbereich geeignet. So können die Werkstoffplatten Verwendung als Oberflächendekorationsmaterial in Nassbereichen, insbesondere in Bädern, für Außenmöbilierung, für Fassaden, oder als Bodenbelagelement, insbesondere in Sauberlaufzonen von Geschäften finden.

Die erfindungsgemäßen Werkstoffplatten werden in einem Verfahren mit den folgenden Schritten hergestellt. In einem ersten Schritt a) wird mindestens eine Oberflächenseite von mindestens einer Trägerplatte modifiziert. Die Modifizierung wird mittels Auftragen einer Spachtelmasse, bevorzugt auf Acrylatbasis und/oder mittels Aufbringen eines Primers, bevorzugt auf Isocyanat-Basis durchgeführt. Die Aushärtung des Spachtelmaterials erfolgt bevorzugt durch Trocknen oder UV-Bestrahlung.

Anschließend erfolgt in Schritt b) das Auftragen von mindestens einer ersten haftvermittelnden Schicht auf die modifizierte Oberflächenseite der Trägerplatte. Bevorzugt wird die zur Bildung der ersten haftvermittelnden Schicht verwendete Komponente, insbesondere die Klebekomponente, in einer Menge zwischen 80 bis 180 g/m² aufgetragen. In dem sich anschließenden Schritt c) wird mindestens eine modifizierte Dekorschicht auf die erste haftvermittelnde Schicht aufgebracht. Die Dekorschicht weist acrylathaltige Verbindungen auf, wobei Acrylate verwendet werden, die im Härtungs-bzw. Trocknungsprozess nachvernetzen.

Parallel oder im Anschluss zum Aufbringen der Dekorschicht kann auf die Rückseite der Trägerplatte ein Gegenzug aufgebracht werden. Die Gegenzugsbeschichtung kann aus einer Gruppe enthaltend Kraftpapier, Bitumen oder einer Mischung enthaltend Holz, Papier und Kunstharz ausgewählt sein. Bevorzugt ist die Gegenzugsbeschichtung mit einem wärmehärtbaren Harz ausgewählt aus der Gruppe enthaltend Melaminformaldehydharz, Harnstoffformaldehydharz, Phenolformaldehydharz oder Kombinationen davon, imprägniert.

Die Verpressung von Dekorschicht und Gegenzug mit der Trägerplatte wird bevorzugterweise in einer Durchlauf- bzw. Kaschierpresse mit einem Liniendruck von 200 bis 400 N/cm, bevorzugt von 250 bis 350 N/cm durchgeführt.

Auf die Dekorschicht wird in dem sich anschließenden Schritt d) mindestens eine zweite haftvermittelnde Schicht, bevorzugt in einer Menge zwischen 5 bis 20 g/m² aufgetragen.

In einem weiteren Schritt e) erfolgt der Auftrag von mindestens einer Verschleißschicht aus einem strahlenhärtbaren acrylathaltigen Lack auf die zweite haftvermittelnde Schicht.

In einer Ausführungsform können im Anschluss an Schritt e) die Schichten bei einem Druck zwischen 3 und 8 MPa und einer Temperatur zwischen 150 und 250°C miteinander verpresst und ausgehärtet werden.

Die Härtung der Verschleißschicht erfolgt bevorzugt durch die Verwendung von Elektronenstrahler, die eine Vernetzung der in der Verschleißschicht verwendeten Lacke von mehr als 99% gewährleisten.

Die Erfindung wird nachfolgend unter Bezugnahme auf die Figuren der Zeichnungen an einem Ausführungsbeispiel näher erläutert. Es zeigen:

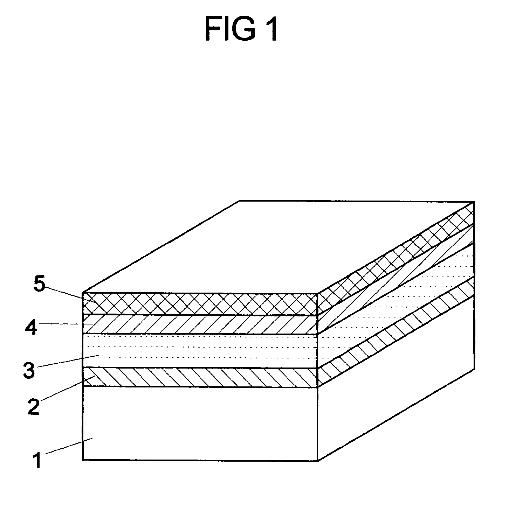

- Figur 1: eine perspektivische Ansicht eines Querschnitts einer erfindungsgemäßen Werkstoffplatte

Figur 1 zeigt den Querschnitt durch eine Werkstoffplatte bestehend aus einer Trägerplatte 1 mit einer Oberflächenschicht 1a, auf welche die erste haftvermittelnde Schicht 2 aufgebracht wurde. Auf die erste haftvermittlernde Schicht 2 wird anschließend ein Dekorfilm als Dekorschicht 3 aufgetragen, der vorher mit einer acrylathaltigen Verbindung getränkt und somit modifiziert wurde. Auf den modifizierten Dekorfilm wird eine zweite, im Wesentlichen eine Isocyanat-Verbindung enthaltende, haftvermittlernde Schicht 4 aufgetragen. Anschließend erfolgt der Auftrag einer Lackschicht zur Ausbildung einer ersten Verschleißschicht 5, auf welcher weitere geeignete Lackschichten aufgebracht werden können.

### Ausführungsbeispiel

Die Oberflächenseite einer Zementspanplatte wird durch Auftragen von 10 g/m² Hexamethylendiisocyanat als Primer modifiziert. Auf die so modifizierte Zementspanplatte werden 100 g/m² eines EVA-Klebstoffes als erste haftvermittelnde Schicht aufgesprüht.

Parallel wird eine Dekorfolie mit einem Poly(acrylat) in einer Menge von 10 g/m² getränkt bzw. besprüht. Die so modifizierte Dekorfolie wird auf die erste haftvermittelnde Schicht aufgetragen und zusammen mit einem mit einem Melaminharz imprägnierten Kraftpapier, welches als Gegenzug auf die der modifizierten Oberflächenseite der Trägerplatte gegenüberliegende Seite aufgetragen ist, bei 300 N/cm verpresst.

Auf die verpresste Dekorschicht wird als zweite haftvermittelnde Schicht Hexamethylendiisocyanat in einer Menge von 10 g/m² aufgetragen, auf die im Anschluss ein Polyester(meth)acrylat als Verschleißschicht aufgesprüht wird. Das Aushärten und das Vernetzen der Schichten erfolgt bei einer Temperatur von 200°C.

## Patentansprüche

1. Werkstoffplatte, insbesondere zur Anwendung im Außenbereich,
**gekennzeichnet durch**
- eine zementgebundene Platte als Trägerplatte (1) mit einer modifizierten Oberflächenseite, wobei die eine Oberflächenseite gespachtelt vorliegt und/oder einen Primer aufweist,
- eine auf der modifizierten Oberflächenseite der Trägerplatte (1) aufgetragene erste haftvermittelnde Schicht (2),
- eine auf der ersten haftvermittelnden Schicht (2) angeordnete modifizierte Dekorschicht (3), wobei die eine Dekorschicht (3) in Form einer Dekorfolie oder eines Dekorfilms acrylathaltige Verbindungen aufweist, wobei Acrylate verwendet werden, die im Härtungs- bzw. Trocknungsprozess nachvernetzen
- eine auf der modifizierten Dekorschicht (3) aufgetragene zweite haftvermittelnde Schicht (4), und
- eine auf der zweiten haftvermittelnden Schicht (4) angeordnete Verschleißschicht (5)_aus einem strahlenhärtbaren acrylathaltigen Lack.

2. Werkstoffplatte nach Anspruch 1, **dadurch gekennzeichnet, dass** die eine modifizierte Oberflächenseite der zementgebundenen Platte (1) einen Primer auf Isocyanatbasis aufweist.

3. Werkstoffplatte nach Anspruch 1 oder 2, **dadurch gekennzeichnet, dass** die zementgebundene Trägerplatte (1) eine zementgebundene Holzfaserplatte und/oder eine zementgebundene Holzspanplatte ist.

4. Werkstoffplatte nach einem der vorhergehenden Ansprüche, **dadurch gekennzeichnet, dass** die erste haftvermittelnde Schicht (2) mindestens eine Klebekomponente und/oder mindestens einen Haftvermittler enthält.

5. Werkstoffplatte nach Anspruch 4, **dadurch gekennzeichnet, dass** die Klebekomponente ausgewählt ist aus der Gruppe enthaltend Schmelzklebstoffe, Isocyanate und modifizierte Silane.

6. Werkstoffplatte nach einem der vorhergehenden Ansprüche, **dadurch gekennzeichnet, dass** die zweite haftvermittelnde Schicht (4) mindestens eine Klebekomponente und/oder mindestens einen Haftvermittler aufweist.

7. Werkstoffplatte nach Anspruch 6, **dadurch gekennzeichnet, dass** die Klebekomponente ausgewählt ist aus der Gruppe enthaltend Acrylate, Isocyanate und modifizierte Silane.

8. Werkstoffplatte nach einem der vorhergehenden Ansprüche, **dadurch gekennzeichnet, dass** mehr als eine Verschleißschicht, bevorzugt zwei oder drei Verschleißschichten jeweils aufeinander angeordnet oder aufgetragen sind.

9. Werkstoffplatte nach einem der vorhergehenden Ansprüche, **dadurch gekennzeichnet, dass** die eine Verschleißschicht (5) chemische Vernetzer enthält.

10. Verwendung einer Werkstoffplatte nach einem der vorhergehenden Ansprüche für Anwendungen im Außenbereich.

11. Verwendung einer Werkstoffplatte nach Anspruch 10 als Oberflächendekorationsmaterial in Nassbereichen, insbesondere in Bädern, für Außenmöbilierung, für Fassaden, als Bodenbelagelement, insbesondere in Sauberlaufzonen von Geschäften.

12. Verfahren zur Herstellung einer Werkstoffplatte nach einem der Ansprüche 1 bis 9 umfassend die folgenden Schritte:
a) Modifizierung einer Oberflächenseite von einer Trägerplatte (1), wobei die eine Oberflächenseite gespachtelt wird und/oder mit einen Primer versehen wird,
b) Auftragen von einer ersten haftvermittelnden Schicht (2) auf die modifizierte Oberflächenseite (1a) der Trägerplatte (1),
c) Aufbringen von einer modifizierten Dekorschicht (3) auf die erste haftvermittelnde Schicht (2), wobei die eine Dekorschicht (3) in Form einer Dekorfolie oder eines Dekorfilms acrylathaltige Verbindungen aufweist, wobei Acrylate verwendet werden, die im Härtungs- bzw. Trocknungsprozess nachvernetzen,
d) Aufbringen von einer zweiten haftvermittelnden Schicht (4) auf die modifizierte Dekorschicht (3), und
e) Aufbringen von mindestens einer Verschleißschicht (5)) aus einem strahlenhärtbaren acrylathaltigen Lack auf die zweite haftvermittelnde Schicht (4).

13. Verfahren nach Anspruch 12, **dadurch gekennzeichnet, dass** im Anschluss an Schritt c) ein Gegenzug auf die der modifizierten Oberflächenseite gegenüberliegende Seite der Trägerplatte aufgebracht wird und der eine Gegenzug, die eine Trägerplatte, die erste haftvermittelnde Schicht und die eine modifizierte Dekorschicht bei einem Liniendruck von 200 bis 400 N/cm miteinander verpresst werden.

## Claims

1. Material board, especially for outdoor application,
**characterized by**
- a cement-bound board as base board (1) having a modified surface side, the one surface side being present in filled form and/or having a primer,
- a first adhesion-promoting layer (2) applied to the modified surface side of the base board (1),
- a modified decorative layer (3) arranged on the first adhesion-promoting layer (2), the one decorative layer (3), in the form of a decorative foil or a decorative film, having acrylate-containing compounds, acrylates used being acrylates which undergo subsequent crosslinking in the curing or drying operation,
- a second adhesion-promoting layer (4) applied to the modified decorative layer (3), and
- a wear layer (5) arranged on the second adhesion-promoting layer (4) and being made of a radiation-curable, acrylate-containing varnish.

2. Material board according to Claim 1, **characterized in that** the one modified surface side of the cement-bound board (1) has an isocyanate-based primer.

3. Material board according to Claim 1 or 2, **characterized in that** the cement-bound base board (1) is a cement-bound wood fibreboard and/or a cement-bound wood chipboard.

4. Material board according to any of the preceding claims, **characterized in that** the first adhesion-promoting layer (2) comprises at least one adhesive component and/or at least one adhesion promoter.

5. Material board according to Claim 4, **characterized in that** the adhesive component is selected from the group comprising hotmelt adhesives, isocyanates and modified silanes.

6. Material board according to any of the preceding claims, **characterized in that** the second adhesion-promoting layer (4) has at least one adhesive component and/or at least one adhesion promoter.

7. Material board according to Claim 6, **characterized in that** the adhesive component is selected from the group comprising acrylates, isocyanates and modified silanes.

8. Material board according to any of the preceding claims, **characterized in that** more than one wear layer, preferably two or three wear layers are each arranged or applied on one another.

9. Material board according to any of the preceding claims, **characterized in that** the one wear layer (5) comprises chemical crosslinkers.

10. Use of a material board according to any of the preceding claims for outdoor applications.

11. Use of a material board according to Claim 10 as surface decoration material in wet areas, especially particularly in bathing facilities, for outdoor furnishing, for architectural facings, as a floor covering element, especially in dirt removal zones of business establishments.

12. Method for producing a material board according to any of Claims 1 to 9, comprising the following steps:
a) modifying one surface side of a base board (1), the one surface side being filled and/or provided with a primer,
b) applying a first adhesion-promoting layer (2) to the modified surface side (1a) of the base board (1),
c) applying a modified decorative layer (3) to the first adhesion-promoting layer (2), the one decorative layer (3), in the form of a decorative foil or a decorative film, having acrylate-containing compounds, acrylates used being acrylates which undergo subsequent crosslinking in the curing or drying operation,
d) applying a second adhesion-promoting layer (4) to the modified decorative layer (3), and
e) applying at least one wear layer (5) being made of a radiation-curable, acrylate-containing varnish to the second adhesion-promoting layer (4).

13. Method according to Claim 12, **characterized in that** following step c) a backing is applied to the side of the base board opposite from the modified surface side, and the one backing, the one base board, the first adhesion-promoting layer and the one modified decorative layer are compressed with one another at a linear pressure of 200 to 400 N/cm.

## Revendications

1. Plaque de matière première, en particulier pour une utilisation à l'extérieur, **caractérisée par**
- une plaque liée au ciment comme plaque de support (1) avec une face de surface modifiée, dans laquelle ladite une face de surface est enduite et/ou présente une couche de fond,
- une première couche d'accrochage (2) déposée sur la face de surface modifiée de la plaque de support (1),
- une couche décorative modifiée (3) disposée sur la première couche d'accrochage (2), dans laquelle ladite une couche décorative (3) sous la forme d'une feuille décorative ou d'un film décoratif présente des composés contenant des acrylates, dans laquelle on utilise des acrylates qui se réticulent ensuite au cours du processus de durcissement ou de séchage,
- une deuxième couche d'accrochage (4) déposée sur la couche décorative modifiée (3), et
- une couche d'usure (5), en une laque contenant des acrylates et durcissable par rayonnement, disposée sur la deuxième couche d'accrochage (4).

2. Plaque de matière première selon la revendication 1, **caractérisée en ce que** ladite une face de surface modifiée de la plaque liée au ciment (1) présente une couche de fond à base d'isocyanates.

3. Plaque de matière première selon la revendication 1 ou 2, **caractérisée en ce que** la plaque de support liée au ciment (1) est une plaque de fibres de bois liée au ciment et/ou une plaque de copeaux de bois liée au ciment.

4. Plaque de matière première selon l'une quelconque des revendications précédentes, **caractérisée en ce que** la première couche d'accrochage (2) contient au moins un composant adhésif et/ou au moins un agent d'accrochage.

5. Plaque de matière première selon la revendication 4, **caractérisée en ce que** le composant adhésif est sélectionné dans le groupe contenant des colles fusibles, des isocyanates et des silanes modifiés.

6. Plaque de matière première selon l'une quelconque des revendications précédentes, **caractérisée en ce que** la deuxième couche d'accrochage (4) présente au moins un composant adhésif et/ou au moins un agent d'accrochage.

7. Plaque de matière première selon la revendication 6, **caractérisée en ce que** le composant adhésif est sélectionné dans le groupe contenant des acrylates, des isocyanates et des silanes modifiés.

8. Plaque de matière première selon l'une quelconque des revendications précédentes, **caractérisée en ce que** plus d'une couche d'usure, de préférence deux ou trois couches d'usure, sont disposées ou déposées chaque fois l'une sur l'autre.

9. Plaque de matière première selon l'une quelconque des revendications précédentes, **caractérisée en ce que** ladite une couche d'usure (5) contient des agents de réticulation chimiques.

10. Utilisation d'une plaque de matière première selon l'une quelconque des revendications précédentes pour des applications à l'extérieur.

11. Utilisation d'une plaque de matière première selon la revendication 10 comme matériau de décoration de surface dans des endroits humides, en particulier dans des salles de bains, pour du mobilier extérieur, pour des façades, comme élément de revêtement de sol, en particulier dans des zones de passage propre de magasins.

12. Procédé de fabrication d'une plaque de matière première selon l'une quelconque des revendications 1 à 9, comprenant les étapes suivantes:
a) modification d'une face de surface d'une plaque de support (1), dans lequel on enduit ladite une face de surface et/ou on lui applique une couche de fond,
b) dépôt d'une première couche d'accrochage (2) sur la face de surface modifiée (1a) de la plaque de support (1),
c) dépôt d'une couche décorative modifiée (3) sur la première couche d'accrochage (2), dans lequel ladite une couche décorative (3) sous la forme d'une feuille décorative ou d'un film décoratif présente des composés contenant des acrylates, dans lequel on utilise des acrylates qui se réticulent ensuite au cours du processus de durcissement ou de séchage,
d) dépôt d'une deuxième couche d'accrochage (4) sur la couche décorative modifiée (3), et
e) dépôt d'au moins une couche d'usure (5) en une laque contenant des acrylates et durcissable par rayonnement sur la deuxième couche d'accrochage (4).

13. Procédé selon la revendication 12, **caractérisé en ce que**, à la suite de l'étape c), on dépose un recouvrement opposé sur la face de la plaque de support située à l'opposé de la face de surface modifiée, et on presse ledit un recouvrement opposé, ladite une plaque de support, ladite première couche d'accrochage et ladite une couche décorative modifiée les uns contre les autres avec une pression linéique de 200 à 400 N/cm.
